# EUROPÄISCHE PATENTSCHRIFT

(11) **EP 0 889 271 B1**
(45) Veröffentlichungstag und Bekanntmachung des Hinweises auf die Patenterteilung: **04.08.2004**
(21) Anmeldenummer: 98109316.4
(22) Anmeldetag: 22.05.1998
(51) Int. Cl.: F16L 27/02, F16L 27/04

(54) **Rohrverbindung zweier sich überlappender Rohre**
Joint between two overlapping pipes
Raccord entre deux tuyaux emboîtés

(30) Priorität: 05.07.1997 DE 19728815
(43) Veröffentlichungstag der Anmeldung: 07.01.1999
(73) Patentinhaber: Dr.Ing.h.c. F. Porsche Aktiengesellschaft, 70435 Stuttgart (DE)
(72) Erfinder: Fuoss, Klaus, 72336 Balingen (DE)

(56) Entgegenhaltungen:
- DE-B- 1 153 953
- US-A- 1 975 925
- US-A- 2 219 752
- US-A- 2 598 338

## Beschreibung

Die Erfindung betrifft eine Rohrverbindung zweier sich überlappender Rohre, insbesondere zur Verbindung von Abgasrohren einer Brennkraftmaschine, nach der Gattung des Hauptanspruches.

Aus der DE 39 08 060 C2 ist eine derartige Rohrverbindung bekannt, bei der zwischen Innenrohr und Außenrohr ein Gelenkring mit einer kugelförmigen Außenkontur angeordnet ist. Dieser Gelenkring ist während der Montage axial verschieblich auf dem Innenrohr. Bei dieser Rohrverbindung, die sowohl eine Längeneinstellung als auch einen Winkelausgleich der miteinander zu verbindenden Rohre ermöglicht, werden diese nach der Einstellung durch ein Spannelement fixiert, das das Außenrohr im Überlappungsbereich übergreift. Dieses Spannelement besteht aus zwei miteinander verschraubten Spannteilen, deren Innenkontur jeweils die Form eines halben Kugelabschnittes aufweist. Diese Spannteile liegen im Überlappungsbereich zum einen am Außenrohr und zum anderen am Gelenkring an. Eine derartige Rohrverbindung ermöglicht eine Längeneinstellung und einen Winkelausgleich der miteinander zu verbindenden Rohre. Der Herstellaufwand für die Bauteile und der Montageaufwand für eine derartige Rohrverbindung sind jedoch relativ aufwendig.

Es ist demgegenüber die Aufgabe der Erfindung, eine gattungsgemäße Rohrverbindung zweier sich überlappender Rohre, insbesondere zur Verbindung von Abgasrohren einer Brennkraftmaschine, die einen Längenausgleich und einen Winkelausgleich der miteinander zu verbindenden Rohre ermöglicht, dahingehend zu verbessern, daß die Montage vereinfacht und der Bauteilaufwand verringert wird.

Diese Aufgabe wird erfindungsgemäß mit den kennzeichnenden Merkmalen des Hauptanspruches gelöst.

Durch die feste Verbindung des Spannelementes mit dem Außenrohr wird der Montageaufwand bei der Justierung und Fixierung der Rohrverbindung deutlich vereinfacht, da die Anzahl der zu handhabenden Bauelemente verringert wird. Neben der Montageerleichterung bedeutet diese Bauteileinsparung gleichzeitig eine Kostenreduzierung durch den verringerten Material- und Herstellaufwand.

Insbesondere wenn die Anforderungen an die Dichtheit der Rohrverbindung relativ gering sind, beispielsweise bei Endrohren einer Abgasanlage, kann der Fertigungsaufwand bei der Herstellung der Bauteile noch einmal deutlich verringert werden, wenn der Gelenkring mit nur einem durchgehenden Trennschnitt versehen ist. Eine für die feste Fixierung der miteinander zu verbindenden Rohrelemente erforderliche Nachgiebigkeit des Gelenkringes kann so erzielt werden, ohne daß mehrere nur über die Teillänge und möglicherweise versetzt angeordnete Einschnitte erforderlich werden.

Eine feste Verbindung der beiden Rohrelemente wird auf vorteilhafte Weise dadurch erreicht, daß das Außenrohr im Überlappungsbereich einen zumindest annähernd axial verlaufenden Einschnitt aufweist, so daß beim Fixieren der Rohrverbindung eine Durchmesserverringerung des Außenrohres möglich ist.

Das Fixieren der Rohrverbindung nach der Längen- und Winkeleinstellung kann auf besonders einfache Weise erreicht werden, wenn das Spannelement zwei abgewinkelte Spannbügel aufweist, die etwa tangential zum Außenrohr verspannt werden.

Eine besonders einfache und kostengünstige Ausführung der Rohrverbindung ergibt sich, wenn die Spannbügel des Spannelementes mit dem Außenrohr verschweißt sind. Dabei kann auf besonders vorteilhafte Weise ein bandförmiges Material genutzt werden, das einen gerundeten Abschnitt aufweist, der jeweils am Außenrohr anliegt und in einen etwa radial zum Außenrohr abgewinkelten Endabschnitt übergeht.

Weitere Vorteile und vorteilhafte Weiterbildungen der Erfindung ergeben sich aus den Unteransprüchen und der Beschreibung.

Ein Ausführungsbeispiel der Erfindung ist in der nachfolgenden Beschreibung und Zeichnung näher erläutert. Letztere zeigt in
- Fig. 1: einen Längsschnitt durch die Rohrverbindung,
- Fig. 2: eine Draufsicht auf das Außenrohr im Überlappungsbereich und
- Fig. 3: eine Ansicht der Stirnseite des Außenrohres.

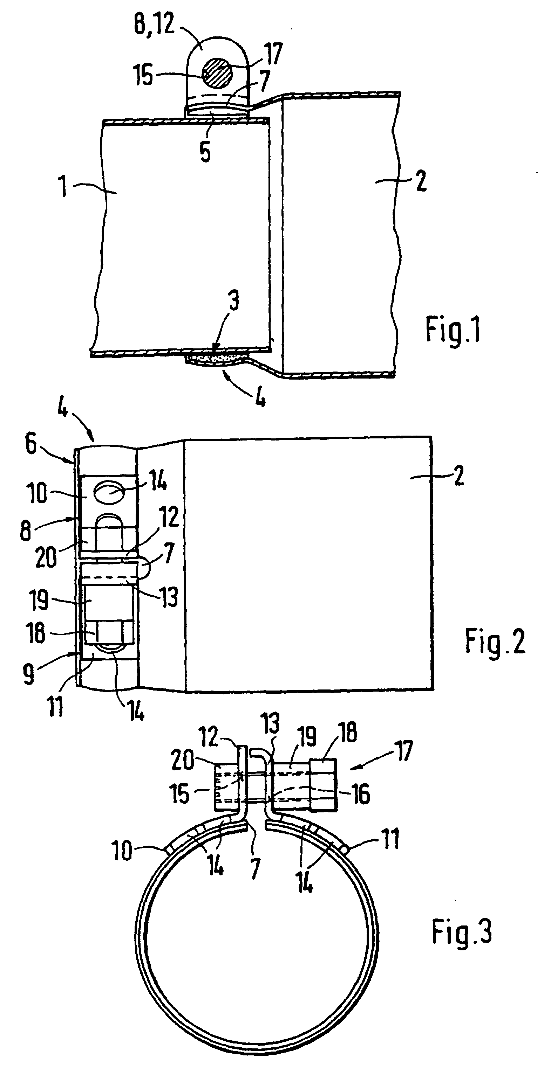

Bei der in Fig. 1 dargestellten Rohrverbindung werden ein zumindest im Endbereich zylindrisches Innenrohr 1 und ein zumindest im Überlappungsbereich zylindrisches Außenrohr 2 miteinander verbunden. Das Innenrohr 1 wird von einem Gelenkring 3 umfaßt, dessen Innendurchmesser so an den Außendurchmesser des Innenrohres angepaßt ist, daß dieser während der Montage axial verschieblich auf dem Innenrohr ist. Der Gelenkring 3 weist eine nach außen gewölbte kugelförmige Außenkontur auf, an der die Innenseite eines entsprechend kugelförmig aufgeweiteten Rohrabschnittes 4 des Außenrohres 2 anliegt. Der Gelenkring 3 hat einen etwa axial verlaufenden durchgehenden Trennschnitt 5, dessen Breite so gewählt ist, daß ein kraftschlüssiges Verspannen des Gelenkringes auf dem Innenrohr möglich ist. Das Außenrohr 2 umgreift im Bereich des Rohrabschnittes 4 den Gelenkring 3, wobei die kugelförmige Innenkontur an der Außenkontur des Gelenkringes anliegt. Dieser Rohrabschnitt 4 hat einen von der Stirnseite 6 ausgehenden etwa axial verlaufenden Einschnitt 7, dessen Breite so bemessen ist, daß ein kraftschlüssiges Verspannen des Rohrabschnittes auf dem Gelenkring bzw. dem Innenrohr möglich ist. Auf beiden Seiten des Einschnittes 7 ist am Außenrohr 2 bzw. am Rohrabschnitt 4 ein Spannbügel 8 bzw. 9 befestigt, der jeweils einen bogenförmigen Abschnitt 10 bzw. 11 und einen etwa radial zum Außenrohr 2 abgewinkelten Endabschnitt 12 bzw. 13 aufweist. Die bogenförmigen Abschnitte 10 und 11 liegen jeweils an der Außenseite des Rohrabschnittes 4 an und sind mit diesem fest verbunden. Diese feste Verbindung kann beispielsweise durch Schweißen erfolgen. Dazu sind in jedem der bogenförmigen Abschnitte zwei Öffnungen 14 vorgesehen, an deren Rändern das Verschweißen erfolgt. Es ist jedoch auch ohne weiteres möglich, die Spannbügel beispielsweise an den Außenseiten der bogenförmigen Abschnitte mit dem Rohrabschnitt 4 zu verschweißen.

Die beiden mit Abstand zueinander angeordneten abgewinkelten Endabschnitte 12 und 13 sind mit fluchtenden Bohrungen 15 und 16 versehen, durch die eine Spannschraube 17 hindurchragt. Diese Spannschraube 17 liegt mit ihrem Schraubenkopf 18 unter Zwischenlage einer Hülse 19 am Endabschnitt 13 an und ist mit einer Mutter 20 verschraubt, die am gegenüberliegenden Endabschnitt 12 anliegt. Um das Handling bei der Montage der Rohrverbindung noch einmal zu vereinfachen, kann die Mutter 20 beispielsweise durch Verschweißen fest am Endabschnitt 12 befestigt sein.

Bei der Montage der beiden Rohre ist aufgrund der axialen Verschieblichkeit des Gelenkringes 3 auf dem Innenrohr eine Längeneinstellung vor dem Verspannen möglich. Aufgrund der zusammenwirkenden kugelförmigen Außen- bzw. Innenkontur des Gelenkringes und des Außenrohres ist gleichzeitig eine Winkeleinstellbarkeit gegeben. Durch Anziehen der Schraubverbindung nach dem Einstellvorgang wird der Rohrabschnitt 4 über den Gelenkring 3 auf dem Innenrohr 1 kraftschlüssig verspannt. Aufgrund des Trennschnittes 5 und des Einschnittes 7 ist die dazu erforderliche Formänderung bzw. Durchmesserverringerung des Rohrabschnittes und des Gelenkringes möglich.

## Patentansprüche

1. Rohrverbindung zweier sich überlappender Rohre, insbesondere zur Verbindung von Abgasrohren einer Brennkraftmaschine, mit einem Außenrohr (2), das einen im Überlappungsbereich kugelförmig aufgeweiteten Rohrabschnitt (4) hat, mit einem geschlitzten Gelenkring (3) mit kugelförmiger Außenkontur zwischen dem Außenrohr (2) und einem Innenrohr (1), und mit einem Spannelement (8, 9) zum Verspannen von Außenrohr (2), Innenrohr (1) und Gelenkring (3), **dadurch gekennzeichnet, daß** das Spannelement (8, 9) fest mit dem Außenrohr (2) verbunden ist.

2. Rohrverbindung nach Anspruch 1, **dadurch gekennzeichnet, daß** der Gelenkring (3) mit einem durchgehenden Trennschnitt (5) versehen ist.

3. Rohrverbindung nach Anspruch 1 oder 2, **dadurch gekennzeichnet, daß** das Außenrohr (2) einen zumindest annähernd axial verlaufenden Einschnitt (7) im Überlappungsbereich aufweist.

4. Rohrverbindung nach einem der vorangehenden Ansprüche, **dadurch gekennzeichnet, daß** das Spannelement (8, 9) zwei abgewinkelte Endabschnitte (12, 13) aufweist, die etwa tangential zum Außenrohr (2) verspannt werden.

5. Rohrverbindung nach Anspruch 4, **dadurch gekennzeichnet, daß** zwischen den Endabschnitten (12, 13) des Spannelementes (8, 9) der Einschnitt (7) angeordnet ist.

6. Rohrverbindung nach einem der vorangehenden Ansprüche, **dadurch gekennzeichnet, daß** das Spannelement (8, 9) mit dem Außenrohr (2) verschweißt ist.

7. Rohrverbindung nach einem der vorangehenden Ansprüche, **dadurch gekennzeichnet, daß** das Spannelement aus zwei Spannbügeln (8, 9) besteht, die aus einem bandförmigen Material bestehen, und einen bogenförmigen Abschnitt (10, 11), der jeweils am Außenrohr (2) anliegt, und einen etwa radial zum Außenrohr abgewinkelten Endabschnitt (12, 13) aufweisen.

## Claims

1. A pipe joint between two mutually overlapping pipes, in particular for connecting exhaust-gas pipes of an internal-combustion engine, with an outer pipe (2) which has a pipe section (4) enlarged in a spherical manner in the overlapping region, with a slotted articulation ring (3) with a spherical external profile between the outer pipe (2) and an inner pipe (1), and with a clamping element (8, 9) for clamping the outer pipe (2), the inner pipe (1) and the articulation ring (3), **characterized in that** the clamping element (8, 9) is connected to the outer pipe (2) in a fixed manner.

2. A pipe joint according to Claim 1, **characterized in that** the articulation ring (3) is provided with a continuous separating cut (5).

3. A pipe joint according to Claim 1 or 2, **characterized in that** in the overlapping region the outer pipe (2) has an indentation (7) extending at least approximately axially.

4. A pipe joint according to one of the preceding Claims, **characterized in that** the clamping element (8, 9) has two angled end portions (12, 13) which are clamped substantially tangentially to the outer pipe (2).

5. A pipe joint according to Claim 4, **characterized in that** the indentation (7) is arranged between the end portions (12, 13) of the clamping element (8, 9).

6. A pipe joint according to one of the preceding Claims, **characterized in that** the clamping element (8, 9) is welded to the outer pipe (2).

7. A pipe joint according to one of the preceding Claims, **characterized in that** the clamping element comprises two clamping clips (8, 9) which consist of a strip-shaped material and have an arcuate portion (10, 11) - which rests against the outer pipe (2) in each case - and an end portion (12, 13) angled substantially radially to the outer pipe.

## Revendications

1. Liaison tubulaire de deux tubes se chevauchant, en particulier pour la liaison de tuyaux d'échappement des gaz d'un moteur à combustion interne, comportant un tube extérieur (2) qui procède un tronçon de tube (4) élargi en forme de sphère dans la zone de recouvrement, comportant une bague articulée (3) fendue au contour extérieur de forme sphérique entre le tube extérieur (2) et un tube intérieur (1), et comportant un élément de serrage (8, 9) pour serrer le tube extérieur (2), le tube intérieur (1) et la bague articulée (3), **caractérisée en ce que** l'élément de serrage (8, 9) est relié de manière fixe au tube extérieur (2).

2. Liaison tubulaire selon la revendication 1, **caractérisée en ce que** la bague articulée (3) est pourvue d'une coupe de séparation (5) traversante.

3. Liaison tubulaire selon la revendication 1 ou 2, **caractérisée en ce que** le tube extérieur (2) comporte une entaille (7), s'étendant au moins approximativement axialement, dans la zone de recouvrement.

4. Liaison tubulaire selon l'une des revendications précédentes, **caractérisée en ce que** l'élément de serrage (8, 9) comporte deux tronçons terminaux (12, 13) coudés qui sont serrés approximativement tangentiellement au tube extérieur (2).

5. Liaison tubulaire selon la revendication 4, **caractérisée en ce que** l'entaille (7) est disposée entre les tronçons terminaux (12, 13) de l'élément de serrage (8, 9).

6. Liaison tubulaire selon l'une des revendications précédentes, **caractérisée en ce que** l'élément de serrage (8, 9) est soudé avec le tube extérieur (2).

7. Liaison tubulaire selon l'une des revendications précédentes, **caractérisée en ce que** l'élément de serrage est constitué de deux étriers de serrage (8, 9) dans un matériau en forme de bande, et comporte un tronçon (10, 11) arqué qui s'applique contre le tube extérieur (2) et un tronçon terminal (12, 13) coudé approximativement radialement par rapport au tube extérieur.
